# EUROPEAN PATENT SPECIFICATION

(11) **EP 0 755 152 B1**
(45) Date of publication and mention of the grant of the patent: **26.01.2000**
(21) Application number: 96302510.1
(22) Date of filing: 10.04.1996
(51) Int. Cl.: H04N 5/44

(54) **An image processing device in a wide screen display system**
Vorrichtung zum Verarbeiten von Bildern in einem Breitbildanzeigesystem
Dispositif de traitement d'image dans un système de visualisation à grand écran

(30) Priority: 18.07.1995 KR 9521045
(43) Date of publication of application: 22.01.1997
(73) Proprietor: Samsung Electronics Co., Ltd., Suwon-city, Kyungki-do 441-370 (KR)
(72) Inventor: Kim, Jeong-Hoon, Kwacheo-city, Kyungki-do (KR)
(74) Representative: Chugg, David John

(56) References cited:
- GB-A- 2 254 977
- US-A- 5 243 421
- EBNER A ET AL: "PALPLUS: UEBERTRAGUNG VON 16:9-BILDERN IM TERRESTRISCHEN PAL-KANAL" 1 November 1992 , FERNSEH UND KINOTECHNIK, VOL. 46, NR. 11, PAGE(S) 733 - 739 XP000322389 * page 738; figure 5 *
- DAMMANN M ET AL: "DIGITAL DECODER CHIPSET FOR IMPROVED WIDE-SCREEN TV RECEIVERS" 7 June 1995 , INTERNATIONAL CONFERENCE ON CONSUMER ELECTRONICS - DIGEST OF TECHNI PAPERS, ROSEMONT, JUNE 7 - 9 1995, NR. CONF. 14, PAGE(S) 396/397 , INSTITUTE OF ELECTRICAL AND ELECTRONICS ENGINEERS XP000547869 * the whole document *
- BUCHNER P: "LINE 23 SIGNALLING" 1 July 1994 , IMAGE TECHNOLOGY (JOURNAL OF THE BKSTS), VOL. 76, NR. 6, PAGE(S) 125 - 127 XP000444745

## Description

The present invention relates to a wide screen display system having a 16:9 aspect ratio, and more particularly to an image processing device for displaying an image of a letterbox size on a screen having a 16:9 aspect ratio.

Until now, most display formats for television systems have had a 4:3 aspect ratio. This aspect ratio is used for both a screen of a projection television system and a display means embodied by an image display region of a general cathode ray tube. The aspect ratio of most video sources is also 4:3.

However, not all video sources are created with a 4:3 aspect ratio. For example, cinema sources are converted from a film format to a video tape format in order to be reproduced or transmitted as a television signal. When such cinema sources are transformed to video format, the aspect ratio has been conventionally transformed to the 4:3 aspect ratio adapted to most television devices. One example of the cinema source is wide screen sources having a 16:9 aspect ratio display format. When such cinema sources are transformed to video tape format, a device such as a flying spot telecine is used. The flying spot telecine has a window or frame having the 4:3 aspect ratio. In general, the operator cuts down left and right portions of the image as necessary while tracking a center portion of action in a film, and simultaneously moves the window to the left and right. The reason for this is that the horizonal width of the film image is wider than the horizontal width of the 4:3 aspect ratio screen in the case of a vertical height of the film image being adapted to the 4:3 aspect ratio screen. Accordingly, a portion of the video signal transformed from the 16:9 aspect ratio of the cinema source to the 4:3 aspect ratio is lost because much of the left and right portions of the film image are cut down.

If the wide screen image is decreased in scale until the horizontal width coincides with left and right boundary lines of the 4:3 aspect ratio screen, the vertical height of the image is smaller. As a result, the film source image is fully displayed on the 4:3 aspect ratio screen, but there are upper and lower portions of the 4:3 aspect ratio screen which are not filled in. In the same manner as above, in order to avoid a spurious signal being generated in a portion of the screen on which the image is not displayed, a dark bar is transmitted to the upper and lower portions of the image transformed to the 4:3 aspect ratio. The particular display format processed as described above is generally called " the letterbox format". Accordingly, a letterbox signal can be thought of as a video signal having a smaller active screen portion than that of a general video signal.

The size of image of a real active screen portion excepting the dark bar which is varied in accordance with the size of source image can be, for example, a letterbox size or a cinemascope size. The image of letterbox size has a 1.85:1 aspect ratio and the image of cinemascope size has 2.35:1 aspect ratio.

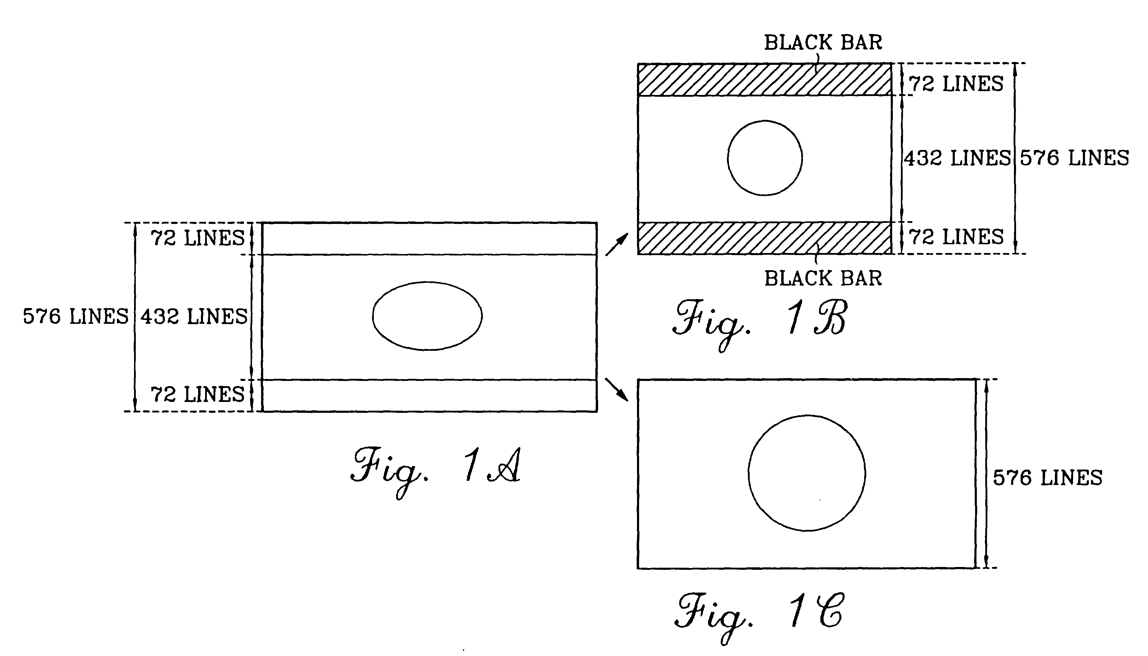

In the meanwhile, in the case of broadcasting a source having a 16:9 aspect ratio, a problem of compatibility with the existing television receiver having a 4:3 aspect ratio emerged. To solve the problem, a novel PALplus of an EDTV (Enhanced Definition Television) system adopted as a widescreen television system having a 16:9 aspect ratio has employed the letterbox format. That is, a transmitting part transmits separately information corresponding to 144 lines of upper and lower dark bars portions among 576 effective horizontal scanning lines of the source image as shown in Figure 1A, and information corresponding to 432 lines of the center portion excepting the upper and lower dark bars. In the case of the existing television receiver having a 4:3 aspect ratio, the display as shown in Figure 1B can be shown, but in the case of the television receiver having a 16:9 aspect ratio, the display as shown in Figure 1C can be shown, wherein the 432 lines are extended to 576 lines.

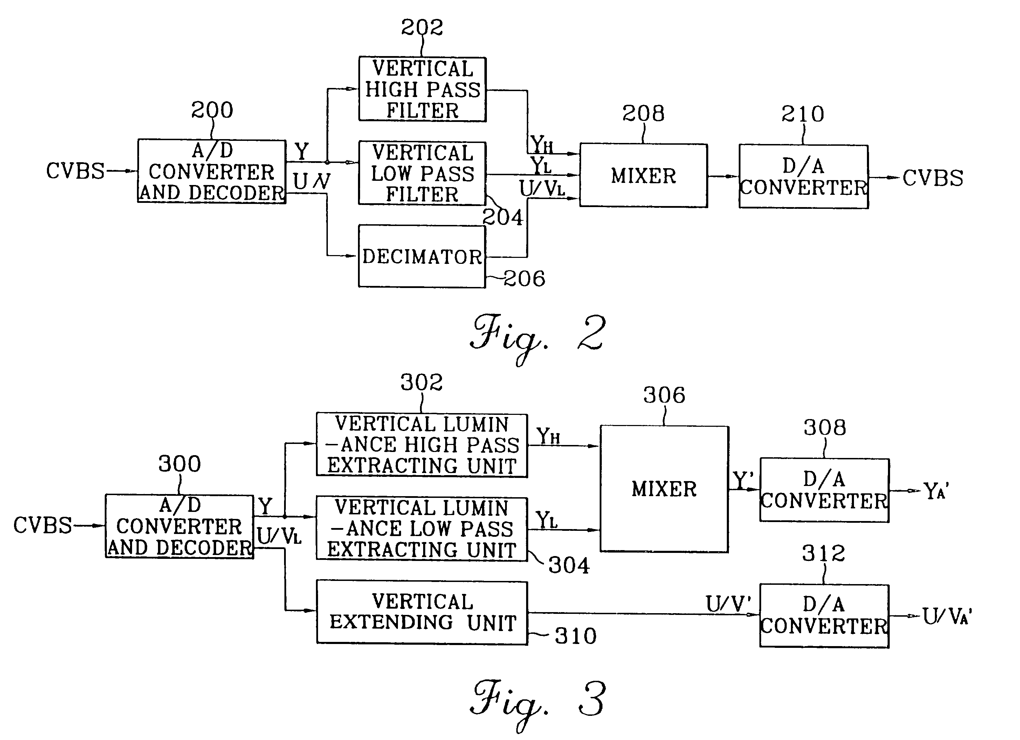

In the above discussed EDTV system, the source having the 16:9 aspect ratio is classified into a luminance signal Y and a chrominance signal U/V. Figure 2 is a block diagram illustrating a configuration of image processing device of the transmitting part in the EDTV system. Referring to Figure 2, the transmitting part converts a composite video baseband signal CVBS into digital data by means of an analog/digital converter and decoder 200 to divide the digital data into the luminance signal Y and chrominance signal U/V. The composite video baseband signal CVBS as a baseband of analog signal is a PALplus image signal. The 144 lines among the 576 effective horizontal scanning lines regarding the separated luminance signal Y is vertically high-pass filtered by a vertical high pass filter 202 to thereby generate a vertical high pass luminance signal Y_{H}, and the remaining 432 lines is vertically low pass filtered by a vertical low pass filter 204 to thereby generate a luminance low pass luminance signal Y_{L}. The vertical high pass luminance signal Y_{H} of the 144 lines corresponds to the 72 upper lines and 72 lower lines, which portions are called a vertical luminance high pass unit. When the television receiver having the 4:3 aspect ratio receives the signal components, they are appropriately processed to be as the upper and lower dark bars as shown in Figure 1B, and the 432 lines is displayed in the center of screen having the 16:9 aspect ratio. The chrominance signal U/V of 576 lines is decimated into 4:3 ratio by means of a decimeter 206 to thereby be converted as the chrominance signal U/V_{L} of 432 lines. The vertical high pass luminance signal Y_{H}, the vertical low pass luminance signal Y_{L}, and the chrominance signal U/V_{L} are mixed by a mixer 208 and then converted into the composite video baseband signal CVBS.

Referring to Figure 3 showing a configuration of image processing device of the receiving part in the EDTV system which displays the above transmitted signal on the screen having the 16:9 aspect ratio. The receiving part converts the composite video baseband signal CVBS into digital data by an analog/digital converter and decoder 300 to divide the digital data into a luminance signal Y and a chrominance signal U/V_{L}. A vertical luminance high pass extracting unit 302 extracts a vertical high pass luminance signal Y_{H} of 144 lines regarding the separated luminance signal Y, and a vertical luminance low pass extracting unit 304 extracts a vertical low pass luminance signal Y_{L} of 432 lines. The vertical high pass luminance signal Y_{H} and the vertical low pass luminance signal Y_{L} are mixed by a mixer 306 to thereby generate a luminance signal Y' of 576 lines. The luminance signal Y' is converted into an analog luminance signal Y_{A}' by a digital/analog converter 308 to be applied into an image-receiving tube. The chrominance signal U/V_{L} of the 432 lines is extended to have the 3: 4 ratio by a vertical extending unit 310 and then output as an analog chrominance signal U/V_{A}' by a digital/analog converter 312 to be applied to the image-receiving tube. Thereafter, the image is fully displayed on the screen having 16:9 aspect ratio as shown in Figure 1C.

In the meanwhile, the EDTV system does not perform the vertical high pass processing procedure because the chrominance signal has a lower degree of resolution than the luminance signal and the hardware structure is rather complicated.

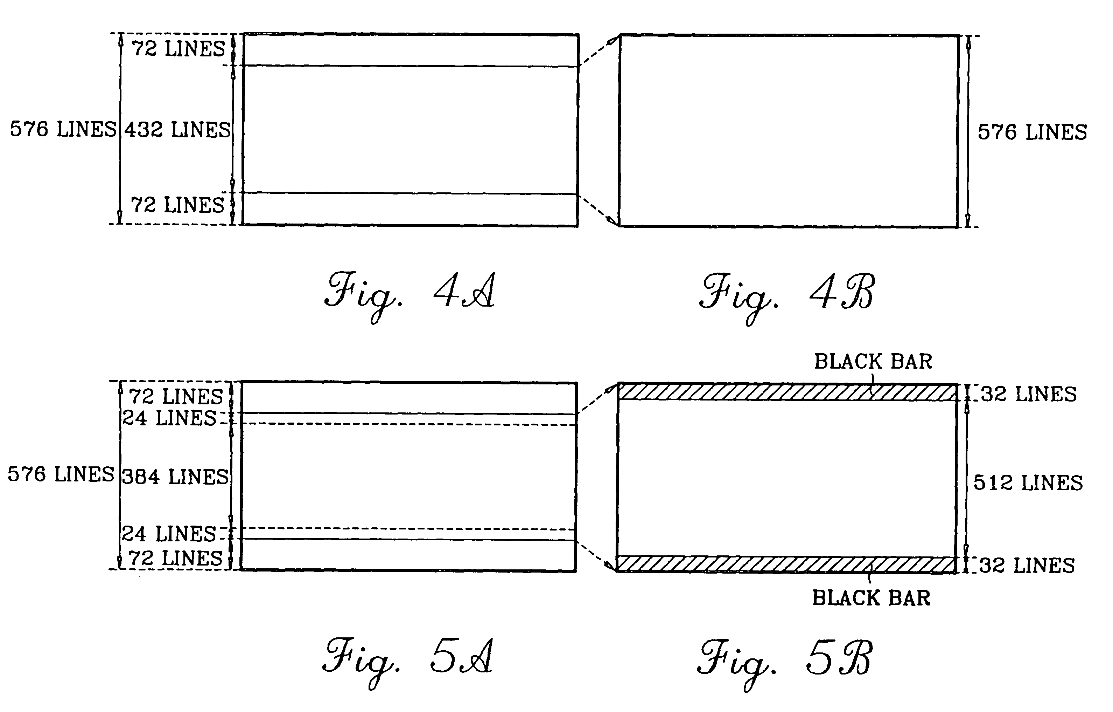

In case of an image source of letterbox size as shown in Figure 4A in the EDTV system, the vertical high pass luminance signal Y_{H} of 144 lines and the vertical low pass luminance signal Y_{L} in the receiving part of Figure 3 are mixed. Then, if 576 lines are made, the image is fully displayed on the screen having the 16:9 aspect ratio, as shown in Figure 4B. However, in case of an image source of cinemascope as shown in Figure 5A, since the number of the effective horizontal scanning lines of the vertical low pass luminance signal Y_{L} are 384, each 24 upper and lower lines among the vertical low pass luminance signal Y_{L} are displayed to black bars. Thereby, as the receiving part vertically extends the signal in the 3:4 ratio upon the processing of Figure 3, black bars of each 32 upper and lower lines are displayed, as shown in Figure 5B.

As discussed above, the image processing device of the EDTV system is adapted into the image source of letterbox size, so that there is a drawback that in case of the image source of cinemascope size having a 2:1 aspect ratio, the black bar appears at upper and lower portions of the screen.

It is, therefore, an aim of preferred embodiments of the present invention to provide an image processing device of a wide screen display system which is capable of displaying an image of letterbox size, without a black bar, on a screen having 16:9 aspect ratio irrespective of an input image size.

With a view to accomplishing this and other objects, there is provided an image processing device of a wide screen display system according to the present invention.

According to a first aspect of the invention, there is provided an image processing device for a wide screen display system which displays a composite video baseband signal of PALplus standard having a letterbox size on a screen having 16:9 aspect ratio, said device comprising:
aspect ratio information decoding means for decoding screen aspect ratio information included in a wide screen signal loaded to said composite video baseband signal to thereby discriminate an image source format;
analog/digital converting and decoding means for converting said composite video baseband signal into digital data and separating a luminance signal and a chrominance signal;
vertical luminance high pass extracting means for vertically high-pass filtering said luminance signal and extracting a vertical luminance high pass signal;
first delay matching means for delaying by a constant time period said vertical luminance high pass signal;
vertical luminance low pass extracting means for vertically low-pass filtering said luminance signal and extracting a vertical luminance low pass signal;
first vertical extending means for vertically extending the number of horizontal scanning lines of said vertical luminance low pass signal into the number of vertical lines of the screen having the 16:9 aspect ratio, in case where said image source format is any image without having the letterbox size;
luminance processing means for mixing, in case where said image source format is an image of the letterbox size, said vertical luminance high pass signal and said vertical luminance low pass signal to thereby output a second luminance signal, and mixing, in case where said image source format is any image without having the letterbox size, the delayed vertical luminance high pass signal and the vertical-extended vertical luminance low pass signal to thereby output the second luminance signal;
second vertical extending means for vertically extending the number of horizontal scanning lines of said chrominance signal into the number of vertical lines of the screen having the 16:9 aspect ratio, in case where said image source format is the image of the letterbox size;
third vertical extending means for vertically extending the number of horizontal scanning lines of said chrominance signal into the number of vertical lines of the screen having the 16:9 aspect ratio, in case where said image source format is any image without having the letterbox size;
second delay matching means for delaying by a constant time period an output of said third vertical extending means; and
chrominance processing means for outputting, in case where said image source format is the image of the letterbox format, an output of said second vertical extending means as a second chrominance signal, and outputting, in case where said image source format is any image without having the letterbox size, an output signal of said second delay matching means as the second chrominance signal.

Preferably, said luminance processing means comprises:
a first multiplexer for selecting said vertical luminance high pass signal, in case where the image source format is the image of the letterbox size, and selecting the delayed vertical luminance high pass signal, in case where said image source format is any image without having the letterbox size, under the control of an output of said aspect ratio information decoding means;
a second multiplexer for selecting said vertical luminance low pass signal, in case where the image source format is the image of the letterbox size, and selecting the vertical-extended vertical luminance low pass signal, in case where said image source format is any image without having the letterbox size, under the control of an output of said aspect ratio information decoding means; and
mixing means for mixing outputs of said first and said second multiplexers and outputting the mixed result as the second luminance signal.

According to a second aspect of the invention, there is provided an image processing device for displaying a composite video baseband signal of PALplus standard having a letterbox size or a cinemascope size on a screen for a wide screen display system, said device comprising:
aspect ratio information decoding means for decoding screen aspect ratio information included in a wide screen signal loaded to said composite video baseband signal to thereby discriminate an image source format;
analog/digital converting and decoding means for converting said composite video baseband signal into digital data and separating a luminance signal and a chrominance signal;
vertical luminance high pass extracting means for vertically high-pass filtering said luminance signal and extracting a vertical luminance high pass signal;
first delay matching means for delaying by a constant time period said vertical luminance high pass signal;
vertical luminance low pass extracting means for vertically low-pass filtering said luminance signal and extracting a vertical luminance low pass signal;
first vertical extending means for vertically extending horizontal scanning from 384 lines of said vertical luminance low pass signal to 432 lines, in case where said image source format is the cinemascope size;
luminance processing means for mixing, in cases where said image source format is an image of the letterbox size, said vertical luminance high pass signal and said vertical luminance low pass signal to thereby output a second luminance signal, and mixing, in case where said image source format is any image without having the letterbox format, the delayed vertical luminance high pass signal and the vertical-extended vertical luminance low pass signal to thereby output the second luminance signal;
second vertical extending means for vertically extending horizontal scanning from 432 lines of said chrominance signal into 576 lines, in cases where said image source format is an image of the letterbox size;
third vertical extending means for vertically extending horizontal scanning from 384 lines of said chrominance signal into 576 lines, in cases where said image source format is cinemascope size;
second delay matching means for delaying by a constant time period an output of said third vertical extending means; and
chrominance processing means for outputting, in cases where said image source format is an image of the letterbox format, an output of said second vertical extending means as a second chrominance signal, and outputting, in cases where said image source format is not the letterbox format, an output signal of said second delay matching means as the second chrominance signal.

Preferably, said luminance processing means comprises:
a first multiplexer for selecting said vertical luminance high pass signal, in case where the image source format is the image of the letterbox format, and selecting the delayed vertical luminance high pass signal, in case where said image source format is the cinemascope size, under the control of an output of said aspect ratio information decoding means;
a second multiplexer for selecting said vertical luminance low pass signal, in case where the image source format is the image of the letterbox format, and selecting the vertical-extended vertical luminance low pass signal, in case where said image source format is the cinemascope size, under the control of an output of said aspect ratio information decoding means; and
mixing means for mixing outputs of said first and said second multiplexers and outputting the mixed result as the second luminance signal.

Preferably, said chrominance processing means comprises a third multiplexer for selecting, in cases where said image source format is an image of the letterbox format, the output of said second vertical extending means and, in cases where said image source format is not the letterbox format, selecting the output of said second delay matching unit.

The invention includes a television and video playback apparatus including a device according to any of the preceding aspects.

According to a further aspect of the invention, there is provided a method of displaying an image of letterbox format, without a black bar, on a screen having a 16:9 aspect ratio, the method comprising the steps of:
decoding aspect ratio information of a composite video baseband signal to determine an input image format;
converting the composite video baseband signal into digital format and decoding it into luminance and chrominance components;
processing the luminance components by separately vertically high pass and vertically low pass filtering it and, in cases where the input image format is of the letterbox format, selecting and mixing together the vertically high pass filtered and vertically low pass filtered luminance components to produce an output luminance signal and, in cases where the input image format is not of the letterbox format, delaying the vertically high pass filtered luminance component, vertically extending the vertically low pass filtered luminance component into the number of vertical low pass lines on a screen of 16:9 aspect ratio, and mixing together the delayed component and the extended component to produce the output luminance signal; and
processing the chrominance component by, in cases where the input image formed is of letterbox format, vertically extending the chrominance component to form an output chrominance signal and, in cases where the input image is not of letterbox format vertically extending the chrominance components by a different extending ratio and delaying it to thereby form the output chrominance signal.

In embodiments of the present invention screen aspect ratio information included in a wide screen signalling loaded in PALplus system composite video baseband signal is decoded in order to discriminate an image source format, and the composite video baseband signal is converted into digital data to thereby separate a luminance signal and chrominance signal. From the luminance signal, a vertical luminance high pass signal and a vertical luminance low pass signal are extracted, and the vertical luminance high pass signal is delayed by a constant time period. And the vertical luminance low pass signal is vertically extended into the number of vertical low pass lines on a screen having a 16:9 aspect ratio. After then, in accordance with the image source format, either the vertical luminance high pass signal or the vertical luminance low pass signal is selected, or the delayed vertical luminance high pass signal and the extended vertical luminance low pass signal are mixed to be output as a luminance signal. Furthermore, the chrominance signal is vertically extended in a different extension ratio in accordance with the image source format, and in case of any image of any size excepting a letterbox size, the extended chrominance signal is delayed by a constant time period. Then, in accordance with the image source format, either the extended or delayed chrominance signal is selected.

For a better understanding of the invention, and to show how embodiments of the same may be carried into effect, reference will now be made, by way of example, to the accompanying diagrammatic drawings, in which:
Figures 1A and 1C represent display states in a wide screen television communication system;
Figure 2 is a block diagram illustrating a configuration of image processing device of the transmitting part in an EDTV system;
Figure 3 is a block diagram illustrating a configuration of image processing device of the receiving part in an EDTV system;
Figures 4A and 4B represent display states of a wide screen for the image of a letterbox size in the image processing device of Figures 2 and 3;
Figures 5A and 5B represent display states of a wide screen for an image of a cinemascope size in the image processing device of Figures 2 and 3; and
Figure 6 is a block diagram illustrating a configuration of an image processing device constructed according to the principles of the present invention.

In the following description, numerous specific details are set forth, such as the detailed name of memory device, or pin arrangement, and so on, in order to provide a thorough understanding of the present invention. It will be obvious, however, to those skilled in the art that these specific details need not be employed to practice the present invention.

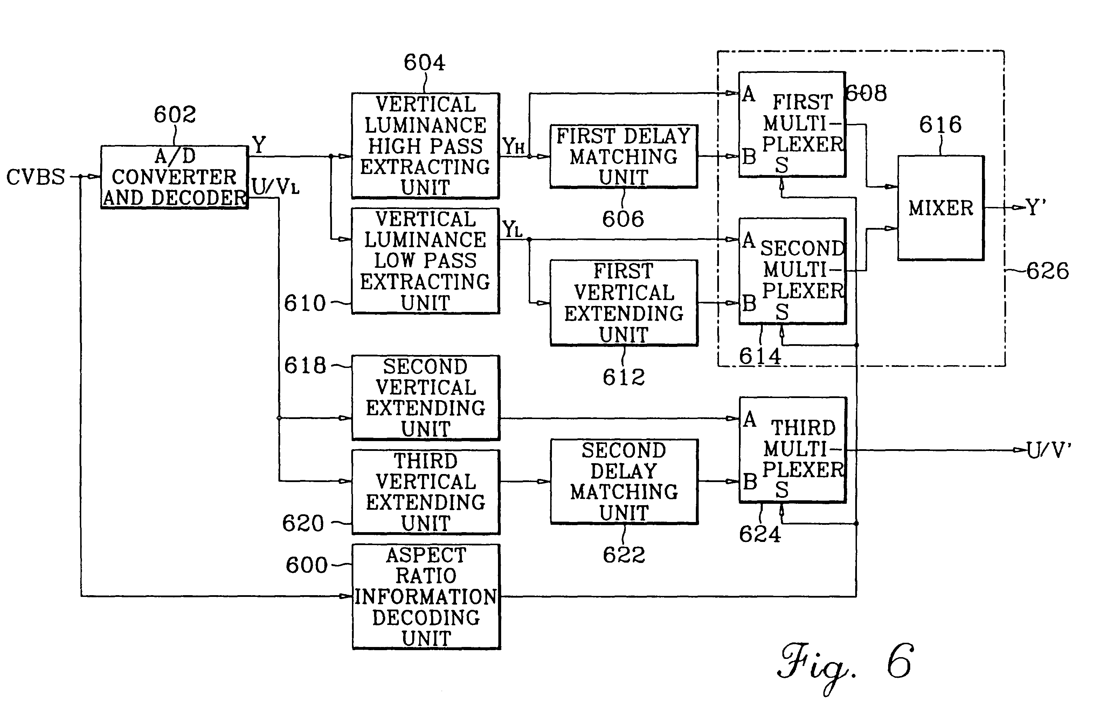

Figure 6 is a block diagram illustrating a configuration of an image processing device constructed according to the principles of the present invention. An aspect ratio information decoding unit 600 decodes screen aspect ratio information included in a wide screen signal (hereinafter referred to as "WSS") loaded onto a PALplus system composite video baseband signal CVBS in order to discriminate an image source format of the composite video baseband signal CVBS. In accordance with the discriminating result, first, second and third multiplexers 608, 614 and 624 are controlled. An analog/digital converter and decoder 602 converts the input composite video baseband signal CVBS into digital data to thereby separate a luminance signal Y and chrominance signal U/V_{L}. A vertical luminance high pass extracting unit 604 extracts a vertical luminance high pass signal Y_{H} from the luminance signal Y. A first delay matching unit 606 delays by a constant time period the vertical luminance high pass signal Y_{H}, the delay time period of which is the time required for the vertical extension processing of a first vertical extending unit 612. A vertical luminance low pass extracting unit 610 extracts a vertical luminance low pass signal Y_{L} from the luminance signal Y. The first vertical extending unit 612 vertically extends in a prescribed first extension ratio the number of horizontal scanning lines of the vertical luminance low pass signal Y_{L} into 432 vertical low pass lines on a screen having a 16:9 aspect ratio. A luminance processing unit 626, which is comprised of the first and second multiplexers 608 and 614 and a mixer 616, mixes the vertical luminance high pass signal Y_{H} and the vertical luminance low pass signal Y_{L} to thereby output a luminance signal Y', in the case that the image source format discriminated by the aspect ratio information decoding unit 600 is of a letterbox size. Otherwise, in the case of an image of any size excepting the letterbox size, the luminance processing unit 626 mixes the delayed vertical luminance high pass signal by the first delay matching unit 606 and the extended vertical luminance low pass signal by the first vertical extending unit 612, to thereby output the luminance signal Y'. The first multiplexer 608 selects and outputs the vertical luminance high pass signal Y_{H} extracted by the vertical luminance high pass extracting unit 604, in the case that the image source format discriminated by the aspect ratio information decoding unit 600 is of the letterbox size. Otherwise, in the case of an image being of any size except the letterbox size, the first multiplexer 608 selects and outputs the vertical luminance high pass signal Y_{H} delayed by the first delay matching unit 606. Similarly, the second multiplexer 614 selects and outputs the vertical luminance low pass signal Y_{L} extracted by the vertical luminance low pass extracting unit 610, in the case that the image source format discriminated by the aspect ratio information decoding unit 600 is the letterbox size and in case of an image of any size except the letterbox size, the second multiplexer 614 selects and outputs the vertical luminance low pass signal Y_{L} extended by the first vertical extending unit 612. The mixer 616 mixes the outputs of the first and second multiplexers 608 and 614 to output the luminance signal Y'. The second vertical extending unit 618 vertically extends in a prescribed second extension ratio the number of horizontal scanning lines of the chrominance signal U/V_{L} into 576 lines on a screen having a 16:9 aspect ratio. A third vertical extending unit 620 vertically extends in a prescribed third extension ratio the number of horizontal scanning lines of the chrominance signal U/V_{L} into 576 lines on a screen having a 16:9 aspect ratio. A second delay matching unit 622 delays by a constant time period the output of the third vertical extending unit 620, the delay time period of which is the time required for the vertical extension processing of the first vertical extending unit 612. The third multiplexer 624 outputs the chrominance signal extended by the second vertical extending unit 618 as a chrominance signal U/V', in the case that the image source format discriminated by the aspect ratio information decoding unit 600 is the letterbox size. Otherwise, in the case of an image of any size except the letterbox size, the third multiplexer 624 outputs the chrominance signal delayed by the second delay matching unit 622 as the chrominance signal U/V'.

An explanation of the operation of the device shown in Figure 6 constructed according to the principles of the present invention will now be discussed in detail.

The composite video baseband signal CVBS input to the image processing device is applied to the analog/digital converter and decoder 602 and the aspect ratio information decoding unit 600. The composite video baseband signal CVBS as of PALplus system having the image of letterbox format may be an image having letterbox size, or an image having any size except the letterbox size, for example, cinemascope size.

At this time, the aspect ratio information decoding unit 600 determines as to whether the image source format of the composite video baseband signal CVBS corresponds to the image of letterbox size, the image of cinemascope size, or the image of any other size. In general, in a PALplus broadcasting signal of the EDTV system, the WSS having the information, such as, a screen aspect ratio, an enhanced service, subtitle, and so on is loaded onto 23th line. The WSS, which is similar to a teletext signal of typical television, is comprised of a preamble and data bits and is line-coded in a bi-phase modulation coding system. The preamble comprises a burn-in code used as a reference signal of a digital phase locked loop PLL at the received part and a start code used to designate a sampling point for the following data bits. The data bits are comprised of all 14 bits and includes a parity bit. The 4 lower bits b0-b3 of the data bits indicate an image format as screen aspect ratio information, and the b3 corresponds to an even parity bit. The next 4 bits b4-b7 indicate the enhanced service information. The bit b4 particularly shows a camera mode or a film mode, and the bits b5-b7 are used for preparation. The 3 bits b8-b10 indicate subtitle information. Last bits b11-b13 are used for preparation. Therefore, the aspect ratio information decoding unit 600 decodes the screen aspect ratio information included in the WSS and discriminates the image source format of the composite video baseband format CVBS, so that the first, second and third multiplexers 608, 614 and 624 are controlled in accordance with the discriminating result.

The aspect ratio information decoding unit 600 outputs a logic "0" in case of the image having letterbox size, and outputs a logic "1" in case of any image without having the letterbox size. It is assumed that the first, second and third multiplexers 608, 614 and 624 select and output the signal input to an input terminal A in case where the signal input to a select input terminal S is the logic "0", and select and output the signal input to an input terminal B in case where the signal input to the select input terminal S is the logic "1".

Under the above state, the analog/digital converter and decoder 602 decodes the composite video baseband signal CVBS to thereby separate the luminance signal Y and the chrominance signal U/V_{L}. At this time, the separated luminance signal Y is applied to the vertical luminance high pass extracting unit 604 and the vertical luminance low pass extracting unit 610, and the chrominance signal U/V_{L} is applied to the second and third vertical extending units 618 and 620.

The luminance signal Y applied to the vertical luminance high pass extracting unit 604 is vertically high pass-filtered to thereby be extracted as the vertical luminance high pass signal Y_{H}, which is applied to the input terminal A of the first multiplexer 608 and simultaneously delayed by a constant time period by the first delay matching unit 606 to be thereby applied to the input terminal B of the first multiplexer 608. At this time, the delay time period by the first delay matching unit 606 is the time required for the vertical extension processing of the first vertical extending unit 612. The luminance signal Y applied to the vertical luminance low pass extracting unit 612 is vertically low pass-filtered to thereby be extracted as the vertical luminance low pass signal Y_{L}, which is applied to the input terminal A of the second multiplexer 614 and simultaneously to the input terminal B of the second multiplexer 614 after the number of the horizontal scanning lines thereof is extended to 432 lines by the first vertical extending unit 612. At this time, in case where the format of the composite video baseband signal CVBS being input is not letterbox size, the first vertical extending unit 612 vertically extends the number of horizontal scanning lines of the vertical luminance low pass signal Y_{L} into the 432 lines by the first extension ratio, which is set to correspond to the format of the composite video baseband signal CVBS. For example, in case of an image of cinemascope size, since the 384 horizontal scanning lines should be extended to 432 lines, the first extension ratio has to be set as about 8:9 ratio, i.e., 9/8. In case of an image of another size, the first extension ratio has to be set so that the horizontal scanning lines thereof should be extended to the 432 lines.

Furthermore, the chrominance signal U/V_{L} applied to the second vertical extending unit 618 is applied to the input terminal A of the third multiplexer 624 after the number of horizontal scanning lines thereof is extended to 576 lines by the second extension ratio. At this time, in cases where the format of the composite video baseband signal CVBS being input is a letterbox size, the second vertical extending unit 618 vertically extends the number of horizontal scanning 432 lines of the chrominance signal U/V_{L} into the 576 lines by the second extension ratio, which is set as 3:4 ratio, i.e., 4/3. The chrominance signal U/V_{L} applied to the third vertical extending unit 620 is applied to the input terminal B of the third multiplexer 624 after the number of horizontal scanning lines thereof is extended to 576 lines by the third extension ratio and then delayed by a constant time period by the second delay matching unit 622. At this time, in cases where the format of the composite video baseband signal CVBS being input is not letterbox size, the third vertical extending unit 620 vertically extends the number of horizontal scanning lines of the chrominance signal U/V_{L} into the 432 lines by the third extension ratio, which is set to correspond to the format of the composite video baseband signal CVBS, in the same manner as the first extension ratio. For example, in case of images of the cinemascope size, since the 384 horizontal scanning lines should be extended to 576 lines, the third extension ratio has to be set as about 2:3 ratio, i.e., 3/2. In case of images of another size, the third extension ratio has to be set so that the horizontal scanning lines thereof should be extended to the 576 lines. And, the delay time period by the second delay matching unit 622 is the time required for the vertical extension processing of the first vertical extending unit 612.

The technology by which the number of horizontal scanning lines of the image signal in the first, second and third vertical extending units 612, 618 and 620 is extended is disclosed in Korean Patent Application No.95-7533 entitled "An apparatus and method for vertically extending an image in a television system" filed on March 31, 1995 by the assignee of the present invention. Therefore, the detailed description of this technology will be avoided for the brevity of the explanation.

The aspect ratio information decoding unit 600 outputs a logic "0", which is applied to the select input terminals S of the first, second and third multiplexers 608, 614 and 624, in the case where the format of the composite video baseband signal CVBS is for an image having the letterbox size. The first multiplexer 608 selects and outputs the vertical luminance high pass signal Y_{H} extracted by the vertical luminance high pass extracting unit 604, and the second multiplexer 614 selects and outputs the vertical luminance low pass signal Y_{L} extracted by the vertical luminance low pass extracting unit 610. Then, the mixer 616 mixes the outputs of the first and second multiplexers 608 and 614 to thereby output the mixed output signal as the luminance signal Y'. The third multiplexer 624 outputs the chrominance signal U/V_{L} vertical-extended by the second vertical extending unit 618 as the chrominance signal U/V'. Hence, in the case where the format of the composite video baseband signal CVBS being input is a letterbox size, the same operation as discussed in relation to Figure 3 is executed.

To the contrary, the aspect ratio information decoding unit 600 outputs a logic "1", which is applied to the select input terminals S of the first, second and third multiplexers 608, 614 and 624, in cases where the format of the composite video baseband signal CVBS is any other image without having the letterbox size. The first multiplexer 608 selects and outputs the vertical luminance high pass signal Y_{H} delayed by the first delay matching unit 606, and the second multiplexer 614 selects and outputs the vertical luminance low pass signal Y_{L} extended by the first vertical extending unit 612. Then, the mixer 616 mixes the outputs of the first and second multiplexers 608 and 614 to thereby output the mixed output signal as the luminance signal Y'. The third multiplexer 624 outputs the chrominance signal U/V_{L} vertical-extended by the third vertical extending unit 620 and then delayed by the second delay matching unit 622 as the chrominance signal U/V'. Hence, even in cases where the format of the composite video baseband signal CVBS being input is any other image without having the letterbox size, the number of horizontal scanning lines is extended in accordance with the format of the image source and the image on a screen is fully displayed irrespective of the size of input screen.

While the present invention has been described with reference to a few specific embodiments, such description is illustrative of the invention and should not be construed as limiting the invention. Various modification may occur to those skilled in the art without departing from the scope of the invention. Particularly, the image processing device according to the present invention is employed to television systems, but may be employed to a video tape recorder for displaying the image of letterbox format on the widescreen having 16:9 aspect ratio. Therefore, it should be understood that the present invention is not limited to the specific embodiments described in this specification except as defined in the appended claims.

As set forth in the above, the present invention provides an image processing device capable of improving a degree of surround-feeling by displaying the image of letterbox format on the widescreen having 16:9 aspect ratio irrespective of the size of image being received.

## Claims

1. An image processing device for a wide screen display system which displays a composite video baseband signal of PALplus standard having a letterbox size on a screen having 16:9 aspect ratio, said device comprising:
aspect ratio information decoding means (600) for decoding screen aspect ratio information included in a wide screen signal loaded to said composite video baseband signal to thereby discriminate an image source format;
analog/digital converting and decoding means (602) for converting said composite video baseband signal into digital data and separating a luminance signal and a chrominance signal;
vertical luminance high pass extracting means (604) for vertically high-pass filtering said luminance signal and extracting a vertical luminance high pass signal;
first delay matching means (606) for delaying by a constant time period said vertical luminance high pass signal;
vertical luminance low pass extracting means (610) for vertically low-pass filtering said luminance signal and extracting a vertical luminance low pass signal;
first vertical extending means (612) for vertically extending the number of horizontal scanning lines of said vertical luminance low pass signal into the number of vertical lines of the screen having the 16:9 aspect ratio, in case where said image source format is any image without having the letterbox size;
luminance processing means (626) for mixing, in case where said image source format is an image of the letterbox size, said vertical luminance high pass signal and said vertical luminance low pass signal to thereby output a second luminance signal, and mixing, in case where said image source format is any image without having the letterbox size, the delayed vertical luminance high pass signal and the vertical-extended vertical luminance low pass signal to thereby output the second luminance signal;
second vertical extending means (618) for vertically extending the number of horizontal scanning lines of said chrominance signal into the number of vertical lines of the screen having the 16:9 aspect ratio, in case where said image source format is the image of the letterbox size;
third vertical extending means (620) for vertically extending the number of horizontal scanning lines of said chrominance signal into the number of vertical lines of the screen having the 16:9 aspect ratio, in case where said image source format is any image without having the letterbox size;
second delay matching means (622) for delaying by a constant time period an output of said third vertical extending means (620); and
chrominance processing means (624) for outputting, in case where said image source format is the image of the letterbox format, an output of said second vertical extending means (618) as a second chrominance signal, and outputting, in case where said image source format is any image without having the letterbox size, an output signal of said second delay matching means (622) as the second chrominance signal.

2. The device as claimed in claim 1, wherein said luminance processing means (626) comprises:
a first multiplexer (608) for selecting said vertical luminance high pass signal, in case where the image source format is the image of the letterbox size, and selecting the delayed vertical luminance high pass signal, in case where said image source format is any image without having the letterbox size, under the control of an output of said aspect ratio information decoding means (600);
a second multiplexer (614) for selecting said vertical luminance low pass signal, in case where the image source format is the image of the letterbox size, and selecting the vertical-extended vertical luminance low pass signal, in case where said image source format is any image without having the letterbox size, under the control of an output of said aspect ratio information decoding means (600); and
mixing means (616) for mixing outputs of said first and said second multiplexers (608, 614) and outputting the mixed result as the second luminance signal.

3. An image processing device for displaying a composite video baseband signal of PALplus standard having a letterbox size or a cinemascope size on a screen for a wide screen display system, said device comprising:
aspect ratio information decoding means (600) for decoding screen aspect ratio information included in a wide screen signal loaded to said composite video baseband signal to thereby discriminate an image source format;
analog/digital converting and decoding means (602) for converting said composite video baseband signal into digital data and separating a luminance signal and a chrominance signal;
vertical luminance high pass extracting means (604) for vertically high-pass filtering said luminance signal and extracting a vertical luminance high pass signal;
first delay matching means (606) for delaying by a constant time period said vertical luminance high pass signal;
vertical luminance low pass extracting means (610) for vertically low-pass filtering said luminance signal and extracting a vertical luminance low pass signal;
first vertical extending means (612) for vertically extending horizontal scanning from 384 lines of said vertical luminance low pass signal to 432 lines, in case where said image source format is the cinemascope size;
luminance processing means (626) for mixing, in cases where said image source format is an image of the letterbox size, said vertical luminance high pass signal and said vertical luminance low pass signal to thereby output a second luminance signal, and mixing, in case where said image source format is any image without having the letterbox format, the delayed vertical luminance high pass signal and the vertical-extended vertical luminance low pass signal to thereby output the second luminance signal;
second vertical extending means (618) for vertically extending horizontal scanning from 432 lines of said chrominance signal into 576 lines, in cases where said image source format is an image of the letterbox size;
third vertical extending means (620) for vertically extending horizontal scanning from 384 lines of said chrominance signal into 576 lines, in cases where said image source format is cinemascope size;
second delay matching means (622) for delaying by a constant time period an output of said third vertical extending means (620); and
chrominance processing means (624) for outputting, in cases where said image source format is an image of the letterbox format, an output of said second vertical extending means (618) as a second chrominance signal, and outputting, in cases where said image source format is not the letterbox format, an output signal of said second delay matching means (622) as the second chrominance signal.

4. The device as claimed in claim 3, wherein said luminance processing means comprises:
a first multiplexer for selecting said vertical luminance high pass signal, in case where the image source format is the image of the letterbox format, and selecting the delayed vertical luminance high pass signal, in case where said image source format is the cinemascope size, under the control of an output of said aspect ratio information decoding means;
a second multiplexer for selecting said vertical luminance low pass signal, in case where the image source format is the image of the letterbox format, and selecting the vertical-extended vertical luminance low pass signal, in case where said image source format is the cinemascope size, under the control of an output of said aspect ratio information decoding means; and
mixing means for mixing outputs of said first and said second multiplexers and outputting the mixed result as the second luminance signal.

5. A device as claimed in any of the preceding claims, wherein said chrominance processing means (624) comprises a third multiplexer for selecting, in cases where said image source format is an image of the letterbox format, the output of said second vertical extending means (618) and, in cases where said image source format is not the letterbox format, selecting the output of said second delay matching unit (622).

6. A television including a device according to any of the preceding claims.

7. A video playback apparatus including a device according to any of claims 1 to 5.

8. A method of displaying an image of letterbox format, without a black bar, on a screen having a 16:9 aspect ratio, the method comprising the steps of:
decoding aspect ratio information of a composite video baseband signal to determine an input image format;
converting the composite video baseband signal into digital format and decoding it into luminance and chrominance components;
processing the luminance components by separately vertically high pass and vertically low pass filtering it and, in cases where the input image format is of the letterbox format, selecting and mixing together the vertically high pass filtered and vertically low pass filtered luminance components to produce an output luminance signal and, in cases where the input image format is not of the letterbox format, delaying the vertically high pass filtered luminance component, vertically extending the vertically low pass filtered luminance component into the number of vertical low pass lines on a screen of 16:9 aspect ratio, and mixing together the delayed component and the extended component to produce the output luminance signal; and
processing the chrominance component by, in cases where the input image formed is of letterbox format, vertically extending the chrominance component to form an output chrominance signal and, in cases where the input image is not of letterbox format vertically extending the chrominance components by a different extending ratio and delaying it to thereby form the output chrominance signal.

## Patentansprüche

1. Bildverarbeitungsvorrichtung für ein Breitbildanzeigesystem, das ein Komposit-Video-Basisband-Signal eines PALplus Standards anzeigt, der eine Briefkasten-Größe auf einem Schirm besitzt, der ein Seitenverhältnis von 16:9 besitzt, wobei die Vorrichtung aufweist:
eine Seitenverhältnis-Informations-Decodiereinrichtung (600) zum Decodieren von Schirm- Seitenverhältnis-Informationen, die in einem Breitbild-Signal umfaßt sind, das zu dem Komposit-Video-Basisband-Signal geladen ist, um dadurch ein Bildquellenformat zu diskriminieren;
eine Analog/Digital-Wandel- und -Decodiereinrichtung (602) zum Wandeln des Komposit-Video-Basisband-Signals in digitale Daten und zum Separieren eines Luminanz-Signals und eines Chrominanz-Signals;
eine Vertikal-Luminanz-Hochpaß-Extrahiereinrichtung (604) zum vertikalen Hochpaßfiltern des Luminanz-Signals und zum Extrahieren eines vertikalen Luminanz-Hochpaß-Signals;
eine erste Verzögerungsanpassungseinrichtung (606) zum Verzögern um eine konstante Zeitperiode des vertikalen Luminanz-Hochpaß-Signals;
eine Vertikal-Luminanz-Tiefpaß-Extrahiereinrichtung (610) zum vertikalen Tiefpaßfiltern des Luminanz-Signals und zum Extrahieren eines vertikalen Luminanz-Tiefpaß-Signals;
eine erste, vertikale Erweiterungseinrichtung (612) zum vertikalen Erweitern der Anzahl horizontaler Abtastlinien des vertikalen Luminanz-Tiefpaß-Signals in die Anzahl von vertikalen Linien des Schirms, der das Seitenverhältnis von 16:9 besitzt, in dem Fall, wo das Bildquellenformat irgendein Bild ist, ohne daß es die Briefkasten-Größe besitzt;
eine Luminanz-Verarbeitungseinrichtung (626) zum Mischen, in dem Fall, wo das Bildquellenformat ein Bild der Briefkasten-Größe ist, des vertikalen Luminanz-Hochpaß-Signals und des vertikalen Luminanz-Tiefpaß-Signals, um dadurch ein zweites Luminanz-Signal auszugeben, und Mischen, in dem Fall, wo das Bildquellenformat irgendein Bild ist, ohne daß es die Briefkasten-Größe besitzt, des verzögerten, vertikalen Luminanz-Hochpaß-Signals und des vertikal erweiterten, vertikalen Luminanz-Tiefpaß-Signals, um dadurch das zweite Luminanz-Signal auszugeben;
eine zweite, vertikale Erweiterungseinrichtung (618) zum vertikalen Erweitern der Anzahl horizontaler Abtastlinien des Chrominanz-Signals in die Anzahl vertikaler Linien des Schirms, der das Seiterverhältnis von 16:9 besitzt, in dem Fall, wo das Bildquellenformat das Bild der Briefkasten-Größe ist:
eine dritte, vertikale Erweiterungseinrichtung (620) zum vertikalen Erweitern der Anzahl horizontaler Abtastlinien des Chrominanz-Signals in die Anzahl vertikaler Linien des Schirms, der das Seitenverhältnis von 16:9 besitzt, in dem Fall, wo das Bildquellenformat irgendein Bild ist, ohne daß es die Briefkasten-Größe besitzt;
eine zweite Verzögerungsanpassungseinricntung (622) zum Verzögern um eine konstante Zeitperiode eines Ausgangs der dritten, vertikalen Erweiterungseinrichtung (620); und eine Chrominanz-Verarbeitungseinrichtung (624) zum Ausgeben, in dem Fall, wo das Bildquellenformat das Bild des Briefkastenformats ist, eines Ausgangs der zweiten, vertikalen Erweiterungseinrichtung (618) als ein zweites Chrominanz-Signal, und Ausgeben, in dem Fall, wo das Bildquellenformat irgendein Bild ist, ohne daß es die Briefkasten-Größe besitzt, eines Ausgangssignals der zweiten Verzögerungsanpassungseinrichtung (622) als das zweite Chrominanz-Signal.

2. Vorrichtung nach Anspruch 1, wobei die Luminanz-Verarbeitungseinrichtung (626) aufweist:
einen ersten Multiplexer (608) zum Auswählen des vertikalen Luminanz-Hochpaß-Signals, in dem Fall, wo das Bildquellenformat das Bild der Briefkasten-Größe ist, und Auswählen des verzögerten, vertikalen Luminanz-Hochpaß-Signals in dem Fall, wo das Bildquellenformat irgendein Bild ist, ohne daß es die Briefkasten-Größe besitzt, unter der Steuerung eines Ausgangs der Seitenverhältnis-Informations-Decodiereinrichtung (600);
einen zweiten Multiplexer (614) zum Auswählen des vertikalen Luminanz-Tiefpaß-Signals in dem Fall, wo das Bildquellenformat das Bild der Briefkasten-Größe ist, und Auswählen des vertikal erweiterten, vertikalen Luminanz-Tiefpaß-Signals in dem Fall, wo das Bildquellenformat irgendein Bild ist, ohne daß es die Briefkasten-Größe besitzt, unter der Steuerung eines Ausgangs der Seitenvernältnis-lnformations-Decodiereinrichtung (600); und
eine Mischeinrichtung (616) zum Mischen von Ausgängen des ersten und des zweiten Multiplexers (608, 614) und zum Ausgeben des gemischten Ergebnisses als das zweite Luminanz-Signal.

3. Bildverarbeitungsvorrichtung zum Anzeigen eines Komposit-Video-Basisband-Signals eines PALplus Standards, der eine Briefkasten-Größe oder eine Cinemascope-Größe auf einem Schirm für ein Breitbild-Anzeigesystem besitzt, wobei die Vorrichtung aufweist:
eine Seitenverhältnis-Informations-Decodiereinrichtung (600) zum Decodieren von Schirm-Seitenverhältnis-lnformationen, die in einem Breitbildsignal umfaßt sind, das zu dem Komposit-Video-Basisband-Signal geladen ist, um dadurch ein Bildquellenformat zu diskriminieren;
eine Analog/Digital-Wandel- und -Decodiereinrichtung (602) zum Wandeln des Komposit-Video-Basisband-Signals in digitale Daten und zum Separieren eines Luminanz-Signals und eines Chrorr,inanz-Signals;
eine Vertikal-Luminanz-Hochpaß-Extrahiereinrichtung (604) zum vertikalen Hochpaßfiltern des Luminanz-Signals und zum Extrahieren eines vertikalen Luminanz-Hochpaß-Signals;
eine erste Verzögerungsanpassungseinrichtung (606) zum Verzögern um eine konstante Zeitperiode des vertikalen Luminanz-Hochpaß-Signals;
eine Vertikal-Luminanz-Tiefpaß-Extrahiereinrichtung (610) zum vertikalen Tiefpaßfiltern des Luminanz-Signals und zum Extrahieren eines vertikalen Luminanz-Tiefpaß-Signals;
eine erste vertikale Erweiterungseinrichtung (612) zum vertikalen Erweitern einer horizontalen Abtastung von 384 Linien des vertikalen Luminanz-Tiefpaß-Signals auf 432 Linien in dem Fall, wo das Bildquellenforrnat die Cinemascope-Größe ist;
eine Luminanz-Verarbeitungseinrichtung (626) zum Mischen, in Fällen, wo das Bildquellenformat ein Bild der Briefkasten-Größe ist, des vertikalen Luminanz-Hochpaß-Signals und des vertikalen Luminanz-Tiefpaß-Signals, um dadurch ein zweites Luminanz-Signal auszugeben, und Mischen in dem Fall, wo das Bildquellenformat irgendein Bild ist, onne daß es das Briefkastenformat besitzt, des verzögerten, vertikalen Luminanz-Hochpaß-Signals unc des vertikal erweiterten, vertikalen Luminanz-Tiefpaß-Signals, um dadurch das zweite Luminanz-Signal auszugeben;
eine zweite, vertikale Erweiterungseinrichtung (618) zum vertikalen Erweitern einer horizontalen Abtastung von 432 Linien des Chrominanz-Signals in 576 Linien in Fällen, wo das Bildquellenformat ein Bild der Briefkasten-Größe ist;
eine dritte, vertikale Erweiterungseinrichtung (620) zum vertikalen Erweitern einer horizontalen Abtastung von 384 Linien des Chrominanz-Signals in 576 Linien in Fällen, wo das Bildquellenformat eine Cinemascope-Größe ist:
eine zweite Verzögerungsanpassungseinrichtung (622) zum Verzögern um eine konstante Zeitperiode eines Ausgangs der dritten, vertikalen Erweiterungseinrichtung (620); und eine Chrominanz-Verarbeitungseinrichtung (624) zum Ausgeben, in Fällen, wo das Bildquellenformat ein Bild des Briefkastenformats ist, eines Ausgangs der zweiten, vertikalen Erweiterungseinrichtung (618) als ein zweites Chrominanz-Signal, und Ausgeben in Fällen, wo das Bildquellenformat nicht das Briefkastenformat ist, eines Ausgangssignals der zweiten Verzögerungsanpassungseinrichtung (622) als das zweite Chrominanz-Signal.

4. Vorrichtung nach Anspruch 3, wobei die Luminanz-Verarbeitungseinrichtung aufweist: einen ersten Multiplexer zum Auswählen des vertikalen Luminanz-Hochpaß-Signals in einem Fall, wo das Bildquellenformat das Bild des Briefkastenformats ist, und Auswählen des verzögerten, vertikalen Luminanz-Hochpaß-Signals in einem Fall, wo das Bildquellenformat die Cinemascope-Größe ist, unter der Steuerung eines Ausgangs der Seitenverhältnis-lnformations-Decodiereinrichtung;
einen zweiten Multiplexer zum Auswählen des vertikalen Luminanz-Tiefpaß-Signals in dem Fall, wo das Bildquellenformat das Bild des Briefkastenformats ist, und Auswählen des vertikal erweiterten, vertikalen Luminanz-Tiefpaß-Signals in dem Fall, wo das Bildquellenformat die Cinemascope-Größe ist, unter der Steuerung eines Ausgangs der Seitenverhältnis-Informations-Decodiereinrichtung; und
eine Mischeinrichtung zum Mischen von Ausgängen des ersten und des zweiten Multiplexers und zum Ausgeben des gemischten Ergebnisses als das zweite Luminanz-Signal.

5. Vorrichtung nach einem der vorhergehenden Ansprüche, wobei die Chrominanz-Verarbeitungseinrichtung (624) einen dritten Multiplexer zum Auswählen in Fällen, wo das Bildquellenformat ein Bild des Briefkastenformats ist, des Ausgangs der zweiten, vertikalen Erweiterungseinrichtung (618), und in Fällen, wo das Bildquellenformat nicht das Briefkastenformat ist, Auswählen des Ausgangs der zweiten Verzögerungsanpassungseinheit (622), aufweist.

6. Fernsehgerät, das eine Vorrichtung nach einem der vorhergehenden Ansprüche umfaßt.

7. Video-Playback-Vorrichtung, die eine Vorrichtung nach einem der Ansprüche 1 bis 5 umfaßt.

8. Verfahren zum Anzeigen eines Bilds eines Briefkastenformats, ohne einen schwarzen Balken, auf einem Schirm, der ein Seitenverhältnis von 16:9 besitzt, wobei das Verfahren die Schritte aufweist:
Decodieren von Seitenverhältnis-lnformationen eines Komposit-Video-Basisband-Signals, um ein Eingangsbildformat zu bestimmen;
Wandeln des Komposit-Video-Basisband-Signals in ein digitales Format und Decodieren dieses in Luminanz- und Chrominanz-Komponenten;
Verarbeiten der Luminanz-Komponenten durch eine separate, vertikale Hochpaß- und vertikale Tiefpaß-Filterung davon, und, in Fällen, wo das Eingangsbildformat das Briefkastenformat ist, Auswähien und Mischen zusammen der vertikal hochpaßgefilterten und vertikal tiefpaßgefilterten Luminanz-Komponenten, um ein Ausgangs-Luminanz-Signal zu produzieren, und in Fällen, wo das Eingangs-Bildformat nicht das Briefkastenformat ist, Verzögern der vertikal hochpaßgefilterten Luminanz-Komponenten, vertikales Erweitern der vertikal tiefpaßgefilterten Luminanz-Komponenten in die Anzahl von vertikalen Tiefpaßlinien auf einem Schirm mit einem Seitenverhältnis von 16:9, und Zusammenmischen der verzögerten Komponente und der erweiterten Komponente, um das Ausgangs-Luminanz-Signal zu produzieren; und
Verarbeiten der Chrominanz-Komponenten durch, in Fällen, wo das Eingangsbild, das gebildet ist, von einem Briefkastenformat ist, vertikales Erweitern der Chrominanz-Komponenten, um ein Ausgangs-Chrominanz-Signal zu bilden, und in Fällen, wo das Eingangsbild nicht das Briefkastenformat ist, vertikales Erweitern der Chrominanz-Komponenten durch ein unterschiedliches Erweiterungsverhältnis und durch Verzögern davon, um dadurch das Ausgangs-Chrominanz-Signal zu bilden.

## Revendications

1. Dispositif de traitement d'image destiné à un système de visualisation à grand écran affichant un signal de vidéo composite en bande de base au standard PALplus de dimensions « letterbox » sur un écran de rapport d'aspect 16:9, ledit dispositif comprenant :
un moyen de décodage d'informations de rapport d'aspect (600) destiné à décoder des informations de rapport d'aspect présentes dans un signal de grand écran chargé dans ledit signal de vidéo composite en bande de base afin de permettre la discrimination d'un format de source d'image ;
un moyen de conversion et de décodage analogique/numérique (602) destiné à convertir ledit signal de vidéo composite en bande de base en données numériques et de séparer un signal de luminance et un signal de chrominance ;
un moyen d'extraction passe-haut de luminance verticale (604) destiné au filtrage passe-haut vertical dudit signal de luminance et à l'extraction d'un signal passe-haut de luminance verticale ;
un premier moyen d'adaptation à retard (606) destiné à retarder d'un période constante ledit signal passe-haut de luminance verticale ;
un moyen d'extraction passe-bas de luminance verticale (610) destiné au filtrage passe-bas vertical dudit signal de luminance et à l'extraction d'un signal passe-bas de luminance verticale ;
un premier moyen d'extension verticale (612) destiné à l'extension verticale du nombre de lignes de balayage horizontales dudit signal passe-bas de luminance verticale au nombre de lignes verticales de l'écran ayant le rapport d'aspect 16:9, dans le cas où ledit format de source d'image est une image quelconque n'ayant pas les dimensions « letterbox » ;
un moyen de traitement de luminance (626) destiné à combiner, dans le cas où ledit format de source d'image est une image de dimensions « letterbox », ledit signal passe-haut de luminance verticale et ledit signal passe-bas de luminance verticale afin de produire un second signal de luminance et à combiner, dans le cas où ledit format de source d'image est une image quelconque ne répondant pas aux dimensions « letterbox », le signal passe-haut de luminance verticale retardée et le signal passe-bas de luminance verticale étendu verticalement afin de produire le second signal de luminance ;
un second moyen d'extension verticale (618) destiné à étendre verticalement le nombre de lignes de balayage horizontales dudit signal de chrominance au nombre de lignes verticales de l'écran ayant un rapport d'aspect de 16 :9, dans le cas où ledit format de source d'image est l'image de dimensions « letterbox » ;
un troisième moyen d'extension verticale (620) destiné à étendre verticalement le nombre de lignes de balayage horizontales dudit signal de chrominance au nombre de lignes verticales de l'écran ayant un rapport d'aspect de 16:9, dans le cas où ledit format de source d'image est une image quelconque n'ayant pas les dimensions « letterbox » ;
un second moyen d'adaptation à retard (622) destiné à retarder d'une période constante une sortie dudit troisième moyen d'extension verticale (620) ; et
un moyen de traitement de chrominance (624) destiné à produire, dans le cas où le format de source d'image est l'image de format « letterbox », un signal de sortie dudit second moyen d'extension verticale (618) comme second signal de chrominance, et à produire, dans le cas où ledit format de source d'image est une image quelconque n'ayant pas le format « letterbox », un signal de sortie dudit second moyen d'adaptation à retard (622) comme second signal de chrominance.

2. Dispositif selon la revendication 1, dans lequel ledit moyen de traitement de luminance (626) comprend :
un premier multiplexeur (608) destiné à choisir ledit signal passe-haut de luminance verticale, dans le cas où le format de source d'image est l'image de dimensions « letterbox » et à choisir le signal passe-haut de luminance verticale retardée dans le cas où ledit format de source d'image est une image quelconque n'ayant pas les dimensions « letterbox », sous le contrôle d'une sortie dudit moyen de décodage d'informations de rapport d'aspect (600) ;
un second multiplexeur (614) destiné à choisir ledit signal passe-bas de luminance verticale, dans le cas où le format de source d'image est l'image de dimensions « letterbox » et à choisir le signal passe-bas de luminance verticale à extension verticale dans le cas où ledit format de source d'image est une image quelconque n'ayant pas les dimensions « letterbox », sous le contrôle d'une sortie dudit moyen de décodage d'informations de rapport d'aspect (600) ; et
un moyen de combinaison (616) destiné à combiner les sorties dudit premier et dudit second multiplexeurs (608, 614) et à produire le résultat de la combinaison pour former le second signal de luminance.

3. Dispositif de traitement d'image destiné à afficher un signal de vidéo composite en bande de base au standard PALplus de dimensions « letterbox » ou de dimensions cinémascope sur un écran destiné à un système de visualisation à grand écran, ledit dispositif comprenant :
un moyen de décodage d'informations de rapport d'aspect (600) destiné à décoder des informations de rapport d'aspect présentes dans un signal de grand écran chargé dans ledit signal de vidéo composite en bande de base afin de permettre la discrimination d'un format de source d'image ;
un moyen de conversion et de décodage analogique/numérique (602) destiné à convertir ledit signal de vidéo composite en bande de base en données numériques et à séparer un signal de luminance et un signal de chrominance ;
un moyen d'extraction passe-haut de luminance verticale (604) destiné au filtrage passe-haut vertical dudit signal de luminance et à l'extraction d'un signal passe-haut de luminance verticale ;
un premier moyen d'adaptation à retard (606) destiné à retarder d'une période constante ledit signal passe-haut de luminance verticale ;
un moyen d'extraction passe-bas de luminance verticale (610) destiné au filtrage passe-bas vertical dudit signal de luminance et à l'extraction d'un signal passe-bas de luminance verticale ;
un premier moyen d'extension verticale (612) destiné à l'extension verticale du nombre de lignes de balayage horizontales des 384 lignes dudit signal passe-bas de luminance verticale à 432 lignes, dans le cas où ledit format de source d'image est une image de dimensions cinémascope ;
un moyen de traitement de luminance (626) destiné à combiner, dans le cas où ledit format de source d'image est une image de dimensions « letterbox », ledit signal passe-haut de luminance verticale et ledit signal passe-bas de luminance verticale afin de produire un second signal de luminance et à combiner, dans le cas où ledit format de source d'image est une image quelconque ne répondant pas aux dimensions « letterbox », le signal passe-haut de luminance verticale retardée et le signal passe-bas de luminance verticale étendu verticalement afin de produire le second signal de luminance ;
un second moyen d'extension verticale (618) destiné à étendre verticalement le nombre de lignes de balayage horizontales de 432 lignes dudit signal de chrominance à 576 lignes, dans les cas où ledit format de source d'image est une image de dimensions « letterbox » ;
un troisième moyen d'extension verticale (620) destiné à étendre verticalement le nombre de lignes de balayage horizontales de 384 lignes dudit signal de chrominance à 576 lignes, dans les cas où ledit format de source d'image est de dimensions cinémascope ;
un second moyen d'adaptation à retard (622) destiné à retarder d'un période constante une sortie dudit troisième moyen d'extension verticale (620) ; et
un moyen de traitement de chrominance (624) destiné à produire, dans le cas où le format de source d'image est une image de format « letterbox », un signal de sortie dudit second moyen d'extension verticale (618) en tant que second signal de chrominance, et à produire, dans les cas où ledit format de source d'image n'est pas le format « letterbox », un signal de sortie dudit second moyen d'adaptation à retard (622) formant le second signal de chrominance.

4. Dispositif selon la revendication 3, dans lequel ledit moyen de traitement de luminance comprend :
un premier multiplexeur destiné à choisir ledit signal passe-haut de luminance verticale, dans le cas où le format de source d'image est l'image de dimensions « letterbox » et à choisir le signal passe-haut de luminance verticale retardée dans le cas où ledit format de source d'image est aux dimensions cinémascope, sous le contrôle d'une sortie dudit moyen de décodage d'informations de rapport d'aspect ;
un second multiplexeur destiné à choisir ledit signal passe-bas de luminance verticale, dans le cas où le format de source d'image est l'image de dimensions « letterbox » et à choisir le signal passe-bas de luminance verticale à extension verticale dans le cas où ledit format de source d'image est une image quelconque de dimensions cinémascope, sous le contrôle d'une sortie dudit moyen de décodage d'informations de rapport d'aspect ; et
un moyen de combinaison destiné à combiner les sorties dudit premier et dudit second multiplexeurs et à produire le résultat de la combinaison pour former le second signal de luminance.

5. Dispositif selon l'une quelconque des revendications précédentes, dans lequel ledit moyen de traitement de chrominance (624) comprend un troisième multiplexeur destiné à choisir, dans les cas où ledit format de source d'image est une image de format « letterbox », la sortie dudit second moyen d'extension verticale (618) et, dans les cas où ledit format de source d'image n'est pas le format « letterbox », à choisir la sortie de ladite seconde unité d'adaptation à retard (622).

6. Dispositif de télévision comportant un dispositif selon l'une quelconque des revendications précédentes.

7. Dispositif de reproduction vidéo comportant un dispositif selon l'une quelconque des revendications 1 à 5.

8. Procédé d'affichage d'une image au format « letterbox », sans barres noires, sur un écran ayant un rapport d'aspect de 16 :9, le procédé comprenant les étapes consistant à :
décoder les informations de rapport d'aspect d'un signal de vidéo composite en bande de base afin de déterminer un format d'image d'entrée ;
convertir le signal de vidéo composite en bande de base au format numérique et le décoder sous la forme luminance et chrominance ;
traiter les composantes de luminance par filtrage séparé passe-haut vertical et passe-bas vertical et, dans les cas où le format d'image d'entrée est le format « letterbox », choisir et combiner mutuellement les composantes de luminance à filtrage vertical passe-haut et vertical passe-bas afin de produire un signal de luminance de sortie et, dans les cas où le format d'image d'entrée n'est pas le format « letterbox », retarder la composante de luminance à filtrage passe-haut vertical, étendre verticalement la composante de luminance à filtrage passe-bas vertical au nombre de lignes passe-bas vertical pour un écran de rapport d'aspect 16:9 et combiner mutuellement la composante retardée et la composante étendue afin de produire le signal de luminance de sortie ; et
traiter la composante de chrominance, dans les cas où l'image entrée est de format « letterbox », par extension verticale de la composante de chrominance afin de former un signal de chrominance de sortie et, dans les cas où l'image entrée n'est pas de format « letterbox », par extension verticale des composantes de chrominance avec un rapport d'aspect différent et les retarder afin de former le signal de chrominance de sortie.
